# EUROPEAN PATENT APPLICATION

(11) **EP 4 183 747 A1**
(43) Date of publication of application: **24.05.2023**
(21) Application number: 21209803.2
(22) Date of filing: 23.11.2021
(51) Int. Cl.: C01G 23/053, C09C 1/00, C09D 1/00

(54) **TITANIUM DIOXIDE MATERIAL WITH IMPROVED PHOTOSTABILITY**

(71) Applicant: KRONOS INTERNATIONAL, INC., 51373 Leverkusen (DE)
(72) Inventor: The designation of the inventor has not yet been filed

(57) **Abstract**

The invention relates to a method for obtaining a titanium dioxide particle according to the chloride process which exhibit improved photostability and UV-greying resistance, said particle obtained by this method and the use of the obtained titanium dioxide particle in various applications. Also, the invention pertains to the use of a pH value of 4.0 to 9.0 to obtain a photostable titanium dioxide particle.

## Description

### Field of the invention

The invention relates to a method for obtaining a titanium dioxide particle according to the chloride process which exhibits improved photostability and UV-greying resistance, said particle obtained by this method and the use of the obtained titanium dioxide particle in various applications. Also, the invention pertains to the use of a pH value of 4.0 to 9.0 to obtain a photostable titanium dioxide particle.

### Technological background of the invention

Titanium dioxide, also known as titania, is a white pigment for high-end applications and occurs as two important polymorphs, the stable rutile and metastable anatase. As a pigment, the titanium dioxide pigment imparts a white colour, and provides the opacity necessary to hide the substrate it is applied on. The sulphate process and the chloride process are established routes to manufacture titanium dioxide. Depending on the end use, the chloride route is preferred over the sulphate route. As opposed to the sulphate process, the chloride process is more energy- and waste-efficient since chlorine is recycled. The obtained waste is moreover less environmental invasive.

In the chloride process titanium-bearing slags or pre-treated ores are used as starting material which are chlorinated at an elevated temperature provided by using coke. Thereby, titanium chloride is obtained and by-products such as iron chlorides, other chlorides as well as solid blow-overs are speared in the exit stream of the chlorinator. In the following step, the gaseous titanium tetrachloride is subject to a distillation thereby achieving the removal of further impurities which are essentially further metal and metalloid chlorides descending from the chlorination of the ore. The purified titanium tetrachloride is then vaporized and oxidized at high temperature in a large controlled flame reactor. As oxidizing agent heated oxygen is commonly used. Several other compounds are injected into the titanium tetrachloride stream, among them, aluminum in the form of aluminum chloride which is oxidized to aluminum oxide. In the obtained titanium dioxide, about 1 wt.% aluminum oxide is present, and promotes the formation of rutile, moderates pigment aggregation and imparts photochemical stability to the particle. After the formation of the pigmentary titanium dioxide, the whole mixture is cooled to below 450 °C to avoid damaging the filter used to separate the titanium dioxide from the chlorine liberated during the oxidation. The chlorine is then recycled which contributes to the cost-effective nature of the chloride process. A portion of the chlorine adheres to the titanium dioxide which is suspended in water. The pH of the suspension is highly acidic, i. e. below 3.5. The adhered chlorine is removed by aqueous hydrolysis conducted in a tub.

The titanium dioxide, also referred to as base material at this stage, is then commonly subject to the after-treatment mostly in aqueous suspension by precipitation of hydroxides and oxyhydroxides of, for example, aluminum and silicon, to improve their performance with respect to specific end use requirements, among them, dispersibility and durability. Optionally, an organic final layer is applied.

It can be observed that titanium dioxide obtained via the chloride route are less photochemical stable which contributes to the chalking phenomena which is the deterioration of organic compounds incorporated in paints, coatings, and the like by the exposure of said compound to sunlight, moisture, and oxygen. Titanium dioxide catalysis this effect with the result that undesirably the appearances is changed, and discoloration, after-roughness, and film erosion is irrevocably and inevitably caused.

When used in laminates a similar effect can be observed. Decor papers and decor foils are widely used in the production of decorative surfaces and are commonly comprised of a stack of papers which are impregnated with a melamine resin and cured under heat and pressure. The laminates do not serve merely as facing paper to cover unattractive wood material surfaces but in addition as carrier for functional papers. The completed paper laminate thus contains the titanium dioxide pigment as well as small amounts of entrapped moisture and oxygen. Incorporated in a laminate and exposed to UV-radiation in the presence of water and oxygen, said laminate can turn grey to a variable degree, which is undesired. Titanium dioxide pigments used for decor papers with a low tendency to UV-greying are well-established and characterized in that aluminium phosphate and an alkaline nitrate are used to suppress UV-greying. However, nitrate pollutes the environment and should thus be omitted.

In sum, there is the need in the art to obtain a photochemical stable titanium dioxide with a reduced tendency to support chalking, suppresses UV-greying and is moreover environmentally friendly.

### Objects and brief description of the invention

It is the object of the present invention to provide a photochemical stable titanium dioxide with a reduced tendency to support chalking and UV-greying and is moreover environmentally friendly. Due to the improved UV-greying resistance, the use of nitrate can be reduced as far as possible or even completely avoided.

The object is achieved by a method for obtaining a titanium dioxide particle according to the chloride process comprising the steps of (i) providing a mixture of titanium tetrahalide, an oxygen-containing gas and an aluminum compound; (ii) reacting the titanium tetrahalide, the oxygen-containing gas and the aluminum compound in a reaction zone to form a titanium dioxide particle and aluminum oxide on the surface of said particle, and (iii) providing an aqueous suspension of said particle, wherein the pH value of the suspension is between 4.0 and 9.5, preferably between 5.0 and 6.0.

The titanium dioxide particle obtained by the method according to the invention suppresses UV-greying in laminate applications and shows improved photochemical stability. Without wishing to be bound to a specific theory, it is believed that more aluminum oxide is present on the obtained titanium dioxide particle following the method according to the present invention which contributes to the improved UV-greying resistance and improved photochemical stability.

Therefore, in a first aspect, the invention relates a method for obtaining a titanium dioxide particle according to the chloride process, comprising the steps of (i) providing a mixture of titanium tetrahalide, an oxygen-containing gas and an aluminum compound; (ii) reacting the titanium tetrahalide, the oxygen-containing gas and the aluminum compound in a reaction zone to form a titanium dioxide particle and aluminum oxide on the surface of said particle, and (iii) providing an aqueous suspension of said particle, wherein the pH value of the suspension is between 4.0 and 9.5, preferably between 5.0 and 6.0.

In a further aspect, the invention relates to a titanium dioxide particle obtained by the method disclosed herein.

In another aspect, the invention pertains to the use of the titanium dioxide particle according to the present invention in the method for obtaining a coating, paint, or lacquer for outdoor applications or a paper laminate or decor foil.

In a yet another aspect, the invention relates to the use of a pH value of 4.0 and 9.5, preferably between 5.0 and 6.0,to obtain a photostable titanium dioxide particle obtained by the chloride process treated with an aluminum compound.

In another aspect, the invention is directed to a decorative paper laminate, or a decor foil comprised of a titanium dioxide particle as disclosed herein.

In a final aspect, the invention refers to a paint, lacquer or coating comprised of a titanium dioxide particle as disclosed herein.

### Description of the Invention

These and further aspects, features, and advantages of the invention become apparent to the skilled person from a study of the following detailed description and claims. Each feature from one aspect of the invention may also be used in any other aspect of the invention. Further, of course, the examples contained herein are intended to describe and illustrate the invention, but not to limit it, and, in particular, the invention is not limited to such examples. Numerical ranges stated in the form "from x to y" include the values mentioned and those values that lie within the range of the respective measurement accuracy as known to the skilled person. If several preferred numerical ranges are stated in this form, of course, all the ranges formed by a combination of the different end points are also included.

All percentages stated in connection with the compositions herein described relate to percent by weight (wt.-%) unless explicitly stated otherwise, respectively based on the mixture of composition in question.

In the first step (i) a mixture of titanium tetrahalide, an oxygen-containing gas and an aluminum compound is provided.

Various titanium tetrahalides such as titanium tetrachloride, titanium tetrabromide, and/or titanium tetraiodide may be used. Preferably, titanium tetrachloride is used. First, titanium tetrahalide is evaporated and heated to a temperature ranging of from about 300 °C to about 650 °C. The titanium tetrahalide can be heated by any suitable means including an indirect fired heater burning natural gas.

Any aluminum compound suitable for the use described herein can be employed. Said compound is preferably an aluminum halide selected from the group consisting of aluminum chloride, aluminum bromide, aluminum iodide and mixture thereof. The aluminum compound is oxidized to aluminum oxide. The aluminum halide is added in amounts sufficient to result in a titanium dioxide particle comprised of from 0.01 wt.% to 10.0 wt.% aluminum oxide, preferably of from 0.1 wt.% to 5.0 wt.%, and more preferably 1.0 wt.% to 2.0 wt.% based on total weight of the titanium dioxide particle. In a preferred embodiment, the aluminum compound is mixed with the titanium tetrahalide before it is mixed with the oxygen-containing gas, for example by injecting the aluminum compound into the titanium tetrahalide.

The oxygen-containing gas contains preferably at least 95 vol.% oxygen, more preferably 98 vol.%. The oxygen-containing gas is preheated to at least 950 °C. Optionally, the oxygen-containing gas comprises a nucleant. "Nucleant", as used herein, refers to any substance which can reduce the particle size of the titanium dioxide particle such as metals, oxides, salts, or other compounds of sodium, potassium, lithium, rubidium, cesium, calcium, barium, strontium, or mixtures thereof. Preferably, cesium chloride, potassium chloride, cesium formate or a mixture thereof are used.

The titanium tetrahalide, the oxygen-containing gas and the aluminum compound are mixed, preferably in a reactor designed for this purpose, in particular a flame reactor. The reactor is optionally a cylindrical plug flow reactor. The inner design of the reactors are optimized in that way that the mixture of titanium tetrahalide, the oxygen-containing and the aluminum compound is realized immediately by introducing sufficient turbulence and pressure drop. These reactors are known in the art.

In step (ii) of the method according to the present invention, the titanium tetrahalide, the oxygen-containing gas and the aluminum compound are brought to reaction in a reaction zone to form a titanium dioxide particle and aluminum oxide on the surface of said particle. "Reaction zone", as used herein, refers to the section the reactor in which the substantial reaction of the titanium tetrahalide, the oxygen-containing gas and the aluminum compound takes place. The temperature of this reaction zone is sufficient to allow the formation of the titanium dioxide particle and on the titanium dioxide particle's surface aluminum oxide is formed. To some extent, the aluminum is incorporated in the titanium dioxide particle. Preferably, the reaction conditions are applied such that corundum is formed. To that end, the temperatures of the titanium tetrachloride and the oxygen-containing gas are applied as described herein and an stoichiometric excess of oxygen to titanium tetrahalide is used. As a result, after complete reaction, titanium tetrahalide is entirely reacted to the titanium dioxide particle, and oxygen is still present. The pressure for carrying out the reaction can be conducted at atmospheric pressure, but is typically operated above 1.0 atmosphere, such as 2.0 to 3.5 atmospheres.

The temperature in the reaction zone preferably ranges of from 850 °C to 1800 °C. The reaction of the oxygen-containing gas and the titanium tetrahalide is extremely fast and is followed by a brief period of particle growth. titanium dioxide particle and aluminum oxide on the surface of said particle may then be rapidly cooled to prevent undesirable particle growth. In accordance with this disclosure, cooling may be performed by methods known in the art. These methods typically involve passing said particle through a cooling conduit having relatively cool walls in comparison to the reaction zone. The walls of the conduit may typically be cooled by passing cool fluid or air externally over the walls.

In step (iii), an aqueous suspension of the titanium dioxide particle and aluminum oxide on the particle's surface is provided. The pH value of the suspension is between 4.0 and 9.5, preferably between 5.0 and 6.0. Therefore, the titanium dioxide particle is separated from the other compounds originating from the reaction of step (ii) such as chlorine. In accordance with this disclosure, separating may be performed by methods known in the art such as by using a filter. The titanium dioxide particles are then suspended in an aqueous mixture resulting in the aqueous suspension. "Aqueous suspension", as used herein, refers to a suspension comprising at least 10 wt.%, preferably 20 wt.%, more preferably at least 30 wt.% water based on the total weight of the aqueous suspension. The titanium dioxide particle is contained in concentrations well known in the art ranging from 150 g/l to 650 g/l, and is preferably present in a concentration of 450 g/l. The amount of chlorine adhered to the titanium dioxide particle lower significantly the pH value of the aqueous suspension, typically to below 3.5. In a preferred embodiment of the present invention the pH value is adjusted by the addition of an alkaline compound. It was observed that the aqueous suspension of between 5.0 and 6.0 exhibits a viscosity suitable for further processing of the aqueous suspension as opposed to a pH ranging of from 6 to 9.5 having a highly viscous suspension. The alkaline compound can be selected from the group consisting of sodium hydroxide, potassium hydroxide, pure ammonia, aqueous ammonia, and mixtures thereof. Sodium hydroxide is particularly preferred. The alkaline compounds may be added as such or preferably added as an aqueous solution. Step (iii) can be conducted in any suitable vessel, preferably equipped with a mixing device to provide a homogeneous aqueous suspension. The addition of the alkaline compound and its amounts is preferably computed and accomplished by apparatuses and sensors.

Steps (i) to (iii) are conducted in the order step (i), then step (ii), and finally step (iii).

The titanium dioxide particle obtained by the method of the present invention is preferably a pigment based on titanium dioxide. "Pigment", as used herein, relates to inorganic colorants that are virtually insoluble in the application medium according to DIN 55 943 which are neither chemically nor physically changed in the application medium and retain their particulate structure. They are employed for coloring, which is based on the interaction of the pigment particles with the visible light by absorption and remission.

The method disclosed herein aims the coating of titanium dioxide particles. The titanium dioxide as disclosed herein is obtained by the chloride process. Titanium dioxide is thus present in the crystal structures of rutile. Rutile is particularly suitable as compared to anatase because of its lower photolytic catalytic activity and its high Mohs hardness.

Within the scope of the invention, the titanium dioxide particle has size such as to scatter the visible light, ideally to a high rate. The particle size is the mass-related median d50 (hereinafter: d50) of from 200 to 400 nm determined by disc centrifuge.

Subsequent to step (iii), the titanium dioxide particles may be subject to the well-known and established after-treatment and may comprise the application of inorganic and/or organic compounds to adjust the properties of the obtained particles to its end-use. To that end, in a preferred embodiment, at least one coating selected from the group consisting of silicon dioxide, aluminum oxide, tin oxide, zirconium oxide, cerium oxide, phosphorous oxide or mixture thereof is applied in step (iv). The metal oxides described in connection with the after-treatment include the respective hydroxides, oxide hydroxide and water-containing phases. The layer thickness of the after-treatment applied to the particles within the scope of the after-treatment is within the nanometer range, and is preferably 10 nm or less, more preferably from 1 nm to 10 nm, so that the particle size of the after-treated particles does not change significantly as compared to the non after-treated particles.

Subsequently to the after-treatment, the particles are separated off, filtered, washed, and dried at a temperature of at least 105 °C with the aim to liberate the water adhered to the after-treated particle, and optionally micronized, for example, in a steam jet mill. The micronization is usually affected through a steam jet mill. During or prior to the micronization an organic compound, such as silanes, siloxanes, trimethylolpropane (TMP), trimethylolethane (TME), hexametaphosphate (HMP), etc. may be added. By doing so the matrix compatibility, especially towards surface-active additives can be improved. Those skilled in the art are aware of such methods.

Preferably, the chloride process is conducted as a multiple stage process. Examples of these multiple stage processes are disclosed in US 8,114,376 B2 and US 4,803,056 B2. All references cited herein are incorporated by reference in their entirety.

In a further aspect, the invention refers to a titanium dioxide particle obtained by a method as disclosed herein. Preferably, the titanium dioxide particle comprises 0.01 wt.% to 10.0 wt.% aluminum oxide, preferably 0.1 wt.% to 5.0 wt.%, and more preferably 1.0 wt.% to 2.0 wt.% based on total weight of the titanium dioxide particle. An amount of less than 1.0 wt.% results in a mediocre weather stability.

In another aspect the invention pertains to the use of the titanium dioxide particle obtained by the method for obtaining a coating, paint, or lacquer for outdoor applications or a paper laminate or decor foil.

In yet another aspect of the invention the invention pertains to the use of a pH value of 4.0 and 9.5, preferably between 5.0 and 6.0 to obtain a photostable titanium dioxide particle obtained by the chloride process treated with an aluminum compound. Preferably, the described pH value is applied after the base material is obtained, i. e., after step (ii) is finalized and prior to the after-treatment is conducted.

In a further aspect the invention refers to a decorative paper laminate or a decor foil comprised of a titanium dioxide particle as disclosed herein. Said laminates and foils exhibit improved UV-greying resistance. The amount of the commonly used nitrate employed to suppress the undesired UV-greying can thus be significantly reduced or the use of nitrate can be entirely omitted.

In a final aspect the invention pertains to a coating, paint, or lacquer comprised of a titanium dioxide particle as described herein. They exhibit improved photochemical resistance. As a result, the coating, paint, and lacquers are prone to degradation and chalking which is undesired.

### Test methods and test results

### Particle size determination

The size of the titanium dioxide particles was determined by using a CPS Disc centrifuge, Model DC 20000 available from CPS Instrument, Inc. located in Florida, United States of America. The sample was prepared by obtaining a first premix by mixing 2 g of a dry pigment particles with 80 g sodium hexametaphosphate solution (0.06 mass % in water) to obtain a first premix. The sodium hexametaphosphate is commercially available from BK Giulini GmbH in Ladenburg, Germany, under the name Calgon N until the first premix was homogenized. Subsequently, 2 g of this first premix were added to a sodium hexametaphosphate solution (0.06 mass % in water), and again sufficiently homogenized by mixing to obtain a second premix. 100 µl of this second premix were used as the sample for determining the particle size. The centrifuge was operated at 3,000 rpm. The calibration standard parameters were as follows:
Particle density: 1.385 g/mL
Peak diameter: 1.27 µl
Half height peak width: 0.08 µl

The fluid parameters were as follows:
Fluid density: 1.045 g/mL
Fluid refraction index: 1.344
Fluid viscosity: 1.2 cps

## Claims

1. A method for obtaining a titanium dioxide particle according to the chloride process, comprising the steps of
(i) providing a mixture of titanium tetrahalide, an oxygen-containing gas and an aluminum compound;
(ii) reacting the titanium tetrahalide, the oxygen-containing gas and the aluminum compound in a reaction zone to form a titanium dioxide particle and aluminum oxide on the surface of said particle, and
(iii) providing an aqueous suspension of said particle, wherein the pH of the suspension is between 4.0 and 9.5, preferably between 5.0 and 6.0.

2. The method according to claim 1, **characterized in, that**
the aluminum oxide formed in step (ii) is in the crystalline form corundum.

3. The method according to claim 1 or 2, **characterized in, that** the aluminum compound is aluminum trichloride.

4. The method according to any one of claims 1 to 3, **characterized in, that** the aluminum compound is added in amounts sufficient to result in a titanium dioxide particle comprised of from 0.01 wt.% to 10.0 wt.% aluminum oxide, preferably of from 0.1 wt.% to 5.0 wt.%, and more preferably 1.0 wt.% to 2.0 wt.% based on total weight of the titanium dioxide particle.

5. The method according to any one of claims 1 to 4, **characterized in, that** the pH in step (iii) is adjusted by an alkaline compound.

6. The method according to claim 5, **characterized in, that**
the alkaline compound is selected from the group consisting of sodium hydroxide, potassium hydroxide, pure ammonia, aqueous ammonia, and mixtures thereof, more preferably the alkaline compound is sodium hydroxide.

7. The method according to any one of claims 1 to 6, **characterized in, that** the mixture in step (i) comprises a nucleant selected from the group consisting of potassium chloride, cesium chloride and cesium formate.

8. The method according to any one of claims 1 to 7, **characterized in, that** after step (iii), at least one coating selected from the group consisting of silicon dioxide, aluminum oxide, tin oxide, zirconium oxide, cerium oxide, phosphorous oxide or a mixture thereof is applied in step (iv).

9. The method according to any one of claims 1 to 8, **characterized in, that** the temperature in step (ii) ranges from 850 °C to 1800 °C.

10. The method according to any one of claims 1 to 9, **characterized in, that** the method is conducted as a multiple stage process.

11. Titanium dioxide particle obtained by a method according to any one of the claims 1 to 10.

12. Use of the titanium dioxide particle according to claim 11 in the method for obtaining a coating, paint, or lacquer for outdoor applications or a paper laminate or decor foil.

13. Use of a pH of 4.0 and 9.5, preferably between 5.0 and 6.0 to obtain a photostable titanium dioxide particle obtained by the chloride process treated with an aluminum compound.

14. Decorative paper laminate or a decor foil comprised of a titanium dioxide particle according to claim 11.

15. Coating, paint, or lacquer comprised of a titanium dioxide particle according to claim 11.
